# EUROPÄISCHE PATENTSCHRIFT

(11) **EP 2 263 819 B1**
(45) Veröffentlichungstag und Bekanntmachung des Hinweises auf die Patenterteilung: **29.10.2014**
(21) Anmeldenummer: 10006249.6
(22) Anmeldetag: 16.06.2010
(51) Int. Cl.: B23D 61/02

(54) **Nachlauflängsrand eines Sägeblatts, Sägeblatt für eine Säge**
Trailing edge of a saw blade, saw blade for a saw
Bord de fuite d'une lame de scie, lame de scie pour une scie

(30) Priorität: 18.06.2009 DE 102009025485
(43) Veröffentlichungstag der Anmeldung: 22.12.2010
(73) Patentinhaber: Irwin Industrial Tool Company, Huntersville, NC 28078 (US)
(72) Erfinder: Metcalfe, Nick, 81249 München (DE); Geier, Manfred, 82178 Puchheim (DE)
(74) Vertreter: Schmid, Nils T.F.

(56) Entgegenhaltungen:
- WO-A1-88/07900
- DE-U1- 7 702 726
- US-A- 4 802 396

## Beschreibung

Die Erfindung betrifft einen Nachlauflängsrand eines Sägeblatts gemäß Anspruch 1, das für eine hin- und herzubewegende Säge zu verwenden ist. Insbesondere betrifft die Erfindung ein Sägeblatt für eine hin- und herbewegbare Säge, welche ein Werkstück bei Schaffung einer durch das Werkstück durchgehenden Schnittnut in dem Werkstück zersägt. Derartige Sägen dienen vor allem dazu, enge Kurvenschnitte in Platten durchzuführen. Ein Beispiel für eine derartige Säge ist eine Bandsäge, eine Stichsäge, insbesondere eine Handstichsäge, oder eine Bogensäge. Das Sägeblatt kann einseitig oder beidseitig an einem Griff oder Betätigungsteil eingespannt sein.

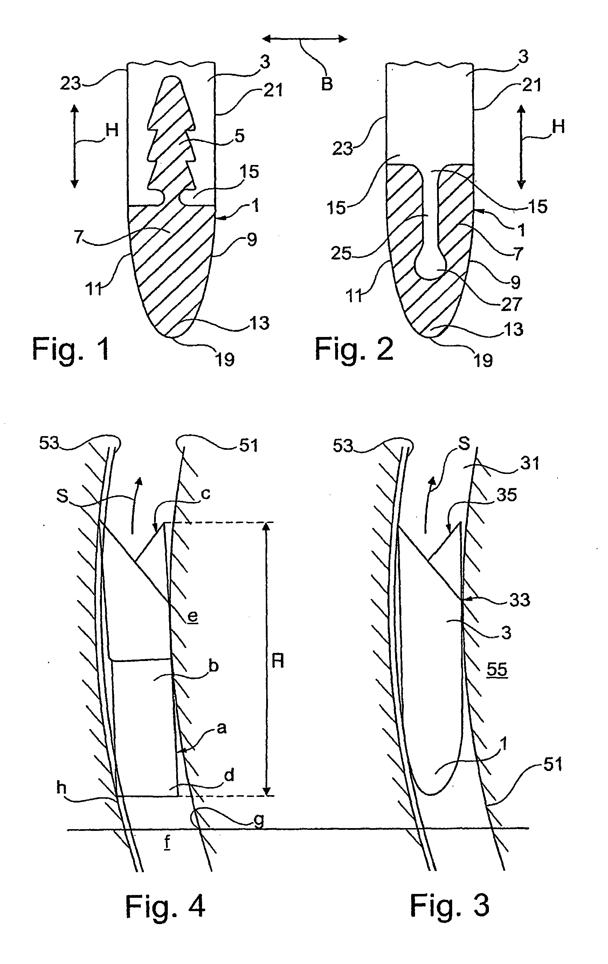

Ein zur Längsrichtung des Sägeblatts orthogonaler Querschnitt oder Seitenansicht eines bekannten Sägeblatts ist in der beiliegenden Figur 4 ersichtlich, in der das Sägeblatt im Allgemeinen mit der Bezugsziffer a bezeichnet ist. Das Sägeblatt umfasst einen Sägeblattkörper b, der zwei Längsränder hat, von denen einer mit einer Reihe c geschränkter Zähne ausgebildet ist, wobei der dem Sägezahnrand c gegenüberliegende Längsrandabschnitt d eine Rechteckform aufweist. Beim Hin- und Herbewegen des Sägeblatts a senkrecht zur Blattebene wird in das Werkstück e eine durchgehende Schnittnut f freigeräumt, welche von zwei sich gegenüberliegenden parallelen Nutwänden, einer äußeren Nutwand g und einer inneren Nutwand h, seitlich begrenzt ist. Beim Sägen wandert das Sägeblatt a in Sägerichtung S senkrecht zur Längsrichtung des Sägeblatts a.

Das Sägeblatt a hat eine wesentlich größere Länge in Längsrichtung als die Höhe A. Die geringe Höhe H des Sägeblatts a ist insofern geboten, als mit dem Sägeblatt a ein möglichst enger Kurvenschnitt realisiert werden sollen, wie sie in Figur A angedeutet ist. Hinsichtlich der Dimensionierung des Sägeblatts a in Höhenrichtung H besteht das funktionale Bedürfnis, die Höhe A so gering wie möglich zu halten, um kleine Radien für einen Kurvenschnitt zu erhalten, ohne dabei die Knickstabilität des Sägeblatts zu beeinträchtigen.

Ein spezielles Design eines bekannten Sägeblatts ist in US 5,295,426 beschrieben, aus dem ein Stichsägenblatt mit einem Zahnreihenlängsrand und einem in dem Zahnreihenlängsrand diametral gegenüber liegenden, angespitzten Längsrand bekannt ist. Der angespitzte Längsrand ist zu einer scharfen Messerschneide ausgebildet, um das Sägeblatt nicht nur zum Sägen, sondern auch als Messer einzusetzen. WO2007/020462 A1 offenbart einen der Sägezahnreihe gegenüber liegenden Nachlauflängsrand mit einer Sägefunktion.

Schließlich offenbart DE 77 02 726 U1 einen Nachlaufrand, der mehrere bogenförmig oder V-förmige Ausschnitte an dem Nachlauflängsrand aufweist.

Ein Sägeblatt für eine Säbelsäge ist aus US 4,802,396 A bekannt. WO 88/07900 A1 offenbart ein Verfahren zur Herstellung eines Materialstreifens für Schneidwerkzeuge.

Bei Versuchen der Erfinder zeigte sich, dass ein Nachlauflängsrand mit zusätzlicher Schneidfunktion dazu neigt, insbesondere beim betriebslosen Herausziehen des Sägeblatts aus der Sägenut an den Nutwänden hängen zu bleiben und diese nicht unwesentlich zu verletzen. Insbesondere dann, wenn besonders feine Schnittflächen an dem Werkstück durch die Ausbildung glatter Nutwände zu realisieren sind, können derartige Verletzungen zu einer verminderten Oberflächengüte des Werkstücks führen, was die Einsetzbarkeit des Werkstücks insbesondere bei einer vorzunehmenden Dauerschwingbelastung reduziert. Es zeigte sich, dass die Vorsprünge oder Profilsprünge, aber vor allem Schneidkanten, an dem Nachlaufrand selbst bei betriebsgemäßem Verlagern längs der Schnittnut Verletzungen an den Nutwänden ausführen. Insbesondere in dem Fall eines Abbruchs des Sägevorgangs während eines Kurvenschnitts muss das Sägeblatt, um die Sägezähne aus dem Sägeeingriff mit dem Werkstück zu befreien, entgegengesetzt der Sägerichtung zurückgesetzt werden, wodurch stets eine Verletzung der Nutwände aufgrund der scharfen Kanten des Nachlaufrands einhergeht.

Alle bekannten Sägeblätter haben den Nachteil, dass eine Reduzierung der Schnittkurvenradien nur einhergehen kann, wenn die Höhe des Sägeblatts reduziert wird, was allerdings die Eigensteifigkeit und Stabilität des Sägeblatts im Betrieb reduziert. Dadurch kann es zu einer Verschlechterung der Ergonomie des Sägeblatts wegen öfteren Einknickens und zum schnelleren Verschleiß des Sägeblatts kommen.

Es ist Aufgabe der Erfindung, die Nachteile des Stands der Technik zu überwinden, ein Sägeblatt für hin- und herzubewegende Sägen bereitzustellen, so dass der Radius eines Kurvenschnitts unter Beibehaltung einer ausreichenden Höhe und Stabilität des Sägeblatts reduziert werden kann, wobei Verletzungen der Sägenutwände weitestgehend zu vermeiden sind.

Diese Aufgabe wird durch das kennzeichnende Teil von Anspruch 1 gelöst.

Danach ist ein Nachlauflängsrand eines Sägeblatts, der einer Sägezahnkante des Sägeblatts bezüglich einer Längssägerichtung des Sägeblatts diametral gegenüber liegt und ein freies Längsende sowie zwei sich gegenüberliegende Seitenflanken aufweist, die in das Längsende münden, derart ausgestaltet, dass das Längsende vollständig gerundet ist. Die Begrenzungslängsflächen des Nachlauflängsrands inklusive des Längsendes sollen vollständig gerundet, insbesondere absatzfrei, kantenfrei und/oder vorsprungsfrei, sein. Es sei klar, dass am Übergang der insbesondere parallel zur Sägerichtung liegenden Stirnfläche des Sägeblatts und des Nachlauflängsrands ein Eckabsatz ausgebildet sein kann.

Der Nachlauflängsrand ist entweder einstückig mit dem Blattkörper des Sägeblatts oder als separates Element ausgeführt, das an das Sägeblatt befestigt, insbesondere geschweißt oder geklebt, werden kann.

Mit der erfindungsgemäßen Maßnahme wird einerseits erreicht, die widerstrebenden Interessen eines stabilen Sägeblatts mit ausreichender Höhe gegenüber der funktionalen Verbesserung eines Sägeblatts im Hinblick auf reduzierte Schnittkurvenradien zu lösen. Mit einem gerundeten Längsende können wesentlich geringere Kurvenradien erreicht werden, weil sich der Nachlauflängsrand besser an die Nutwand anschmiegen kann, die einen größeren Radius beschreibt als die radial innen liegende Nutwand. Zudem zeigte sich, dass mit dem gerundeten Nachlauflängsrand eine Verletzung der Nutwand selbst bei Zurücksetzen des Sägeblatts in zur Sägerichtung entgegen gesetzter Richtung ausgeschlossen werden kann.

Bei einer bevorzugten Ausführung der Erfindung sind beide Seitenflanken derart gerundet, dass sie außen formkontinuierlich frei eines Profilsprungs, wie eines Absatzes oder einer Vertiefung, in das gerundete Längsende übergehen. Damit ist erreicht, dass auch beim Verlagern des Sägeblatts längs der Schnittnut insbesondere bei einem kurzen Zurücksetzen und Herausziehen des Sägeblatts aus einer gekrümmten Schnittnut keine vorstehenden Kanten des Sägeblatts die Nutwand, insbesondere einer Schnittkurve die Nutwand mit größerem Radius, verletzt wird. Als Seitenflanken sind die Bereiche anzusehen, welche sich von dem runden Längsrand symmetrisch zu einer Symmetrieachse in Höhenrichtung in den Sägeblattkörper übergehend erstrecken. Vorzugsweise verlaufen diese Seitenflanken in Längsrichtung des Sägeblattes formkontinuierlich ohne Profiländerung. Dabei können sich die Seitenflanken parallel zueinander in Längsrichtung und parallel zum gerundeten Längsende erstrecken. Vorzugsweise haben der Nachlauflängsrand und das Längsende eine in Längsrichtung kontinuierlich unveränderte Querschnittsform.

Bei einer bevorzugten Ausführung der Erfindung hat der Nachlauflängsrand einen zu dessen Längsrichtung orthogonalen Querschnitt, dessen durch die gerundeten Seitenflanken und/oder das runde Längsende gebildeter Begrenzungsrand ein in Längsrichtung des Sägeblatts unveränderliches Außenprofil definiert. Dabei kann das Außenprofil einen kleinsten Radius an dem runden Längsende aufweisen.

Bei einer bevorzugten Ausführung der Erfindung hat der Nachlauflängsrand einen zu dessen Längsrichtung orthogonalen Querschnitt, der im Wesentlichen teil-elliptisch oder teil-kreisförmig, vorzugsweise im Wesentlichen halb-elliptisch oder halb-kreisförmig, ist.

Bei einer bevorzugten Ausführung der Erfindung ist der zur Längsrichtung orthogonale Querschnitt des Nachlauflängsrands in einer Torpedoform gestaltet. Dabei kann der gerundete Torpedokopf durch den Nachlauflängsrand gebildet sein, wobei der insbesondere längliche, geradlinige Torpedokörper durch den an den Nachlauflängsrand anschließenden Blattkörper des Sägeblatts mit zueinander parallelen Seitenflächen gebildet sein kann.

Bei einer bevorzugten Ausführung der Erfindung hat der Nachlauflängsrand einen der Sägezahnkante zugewandten Übergangslängsabschnitt, insbesondere ein Montagelängsende zum Befestigen des Nachlauflängsrands an einen dem Sägezahnrand diametral gegenüberliegenden Montagelängsrand des Sägeblatts. Dabei können die Seitenflanken derart gerundet oder gekrümmt sein, dass eine Seitenflanke am Übergangslängsabschnitt tangential in die jeweilige, der Seitenflanke benachbarte Seitenfläche des anschließenden Blattkörpers des Sägeblatts münden. Vorzugsweise ist der Übergangslängsabschnitt derart dimensioniert, dass er im Wesentlichen formkontinuierlich, frei eines Absatzes oder einer Vertiefung in das Sägeblatt übergeht. Vorzugsweise hat der Übergangslängsabschnitt des Nachlauflängsrands eine insbesondere maximale Querschnittsbreite, die gleich einer insbesondere konstanten Stärke des Sägeblatts ist.

Bei einer Weiterbildung der Erfindung nimmt die maximale Querschnittsbreite an dem Übergangslängsabschnitt des Nachlauflängsrands kontinuierlich, vorzugsweise stetig zunehmend, bis zum freien Längsende des Nachlauflängsrands ab.

Bei einer bevorzugten Ausführung der Erfindung ist eine maximale Querschnittshöhe des Nachlauflängsrands insbesondere zwischen einem Übergangslängsabschnitt und dem runden Längsende größer, insbesondere deutlich größer, vorzugsweise doppelt so groß, wie eine maximale Querschnittsbreite des Nachlauflängsrands insbesondere auf Höhe des Übergangslängsabschnitts des Sägeblatts. Vorzugsweise ist die Querschnittshöhe des Nachlauflängsrands kleiner als das Dreifache oder 2,5-fache der Querschnittsbreite des Nachlauflängsrands

Bei einer Weiterbildung der Erfindung ist der Nachlauflängsrand achsensymmetrisch geformt. Dabei ist eine Querschnittshöhenachse relevant, die insbesondere mit einer Höhenrichtungsachse des Sägeblatts fluchtet.

Der Nachlauflängsrand des Sägeblatts ist zum separaten Montieren an einen dem Sägezahnrand diametral gegenüberliegenden Montagelängsrand des Sägeblatts ausgeführt. Dazu hat der Nachlauflängsrand ein Montagelängsende, das vor der Montage frei ist. Das Montagelängsende kann derart gestaltet sein, dass ein Form- und/oder Kraftschluss mit dem Montagelängsrand des Sägeblatts ohne die Verwendung eines Haftübermittlers- oder Klebstoffs erzielt wird. Der Nachlauflängsrand kann auch an den Montagelängsrand des Sägeblatts geklebt oder geschweißt oder gelötet sein. Das Montagelängsende, insbesondere dessen Befestigungsprofil, erstreckt sich vorzugsweise parallel zum freien runden Längsende, wobei das Montageende sein Außenprofil nicht ändert.

Vorzugsweise ist das Montagelängsende mit einer positiven Profilierung versehen, die an einer der positiven Profilierung formkomplementären, negativen Profilierung an dem Montagelängsrand des Sägeblatts angepasst ist, um den Nachlauflängsrand an das Sägeblatt sicher zu befestigen. Dabei kann die positive Profilierung in Längsrichtung des Nachlauflängsrands formkonstant sein. Bei einer bevorzugten Ausführung der Erfindung ist der Nachlauflängsrand an dem Montagelängsrand des Sägeblatts eingeknüpft.

Vorzugsweise ist die positive Profilierung am Montagelängsende des Nachlauflängsrands durch wenigstens einen Hinterschnitt, vorzugsweise genau einen oder zwei oder drei Hinterschnitte, gebildet.

Außerdem kann die positive Profilierung eine Keilform, eine Pfeilform, eine Baumform, eine Tannenbaumform, oder dergleichen, aufweisen.

Bei einer bevorzugten Ausführung der Erfindung ist der Nachlauflängsrand aus einem Werkstoff reduzierter Kontaktreibung gefertigt. Dabei kann der Nachlauflängsrand ausschließlich aus einem einzigen Werkstoff gefertigt sein.

Beispielsweise kann der Nachlauflängsrand aus einem keramischen Material, Nylon, Teflon, ultrahochmolekulargewichtigen Polyethylen (UHMWPE), Verbundwerkstoff oder Schnellarbeitsstahl, wie HSS oder HCS, gefertigt sein.

Bei einer bevorzugten Ausführung der Erfindung ist der Nachlauflängsrand mit einer Beschichtung reduzierter Kontaktreibung versehen, die insbesondere durch physikalische Gasphasenabscheidung (PVD) oder chemische Gasphasenabscheidung (CVD) gebildet ist.

Vorzugsweise ist eine Profiloberfläche des Nachlauflängsrands, welche Seitenflanken und/oder das runde Längsende begrenzt, poliert.

Des Weiteren betrifft die Erfindung ein Sägeblatt für eine Hin- und Hersägebewegung, insbesondere für eine Bandsäge, eine Stichsäge, vorzugsweise eine Handstichsäge, oder eine Bogensäge. Das Sägeblatt hat einen beim Sägen vorlaufenden Sägezahnrand und einen nach einem der vorstehenden Beschreibung gebildeten Nachlauflängsrand.

Bei einer bevorzugten Ausführung der Erfindung ist der Nachlauflängsrand, ein Blattkörper des Sägeblatts und gegebenenfalls die Sägezahnkante aus einem Stück, insbesondere aus einem Metallstück, gefertigt.

Weitere Eigenschaften, Vorteile und Merkmale der Erfindung werden durch die folgende Beschreibung bevorzugter Ausführungen der Erfindung anhand der beiliegenden Zeichnungen deutlich, in denen zeigen:
- Figur 1: eine Querschnittsansicht eines an einem Sägeblatt befestigten erfindungsgemäßen Nachlauflängsrand in einer ersten Ausführung;
- Figur 2: eine Querschnittsansicht eines Nachlauflängsrands in einer zweiten Ausführung; und
- Figur 3: eine Draufsicht eines erfindungsgemäßen in einer Schnittnut liegenden Sägeblatts mit einem erfindungsgemäßen Nachlauflängsrand.

In Figur 1 ist eine erste Ausführung des erfindungsgemäßen Nachlauflängsrands im Allgemeinen mit der Bezugsziffer 1 versehen, der in dieser Ausführung als zum Sägeblatt 3 separat gefertigtes Bauteil ausführt ist und mit Formschluss mit dem Sägeblattkörper 3 verbunden ist. An dem Sägeblattkörper 3 ist ein in Figur 1 nicht dargestellter Sägezahnrand ausgebildet, der dem Nachlauflängsrand 1 diametral gegenüberliegt.

Der erfindungsgemäße Nachlauflängsrand 1 kann beispielsweise aus Nylon oder einem anderen Material reduzierter Reibung realisiert sein. Der Nachlauflängsrand 1 besteht im Wesentlichen aus einem Montagelängsende 5, einem Randhauptkörper 7, der im Wesentlichen von zwei gekrümmten seitlichen Längsflankenoberfläche 9, 11 begrenzt ist, und einem gerundeten Längsende 13.

Wie in Figur 1 ersichtlich ist, ist das Montagelängsende 5 mit einer positiven Profilierung in Form eines Tannenbaums ausgebildet, die sechs Hinterschnitte zum Verhaken mit dem Sägeblattkörper 3 umfasst. Der Montagelängsrand 15 des Sägeblattkörpers 3 ist mit einer negativen Profilierung versehen, die formkomplementär zur positiven Profilierung des Montagelängsendes 5 des Nachlauflängsrands 1 geformt ist.

Die Profilierungen haben eine maximale Verjüngung unmittelbar in Höhenrichtung H am Ende des Montagelängsrands 15 des Sägeblattkörpers 3. Beim Befestigen des Nachlauflängsrands 1 an den Sägeblattkörper 3 wird vorerst der Blattkörper 3 erwärmt, um die negative Profilierung thermisch zu weiten, damit die positive Profilierung des Montagelängsendes 5 des Nachlauflängsrands 1 einfacher in die negative Profilierung des Sägeblattkörpers 3 eingeknüpft werden kann. Dabei verhakt die Hinterschnittanordnung. Zusätzlich zu diesem Formschluss kann ein Haftvermittler oder ein Klebstoff an den Kontaktflächen zwischen dem Sägeblattkörper 3 und dem Nachlauflängsrand 1 vorgesehen sein.

Wie in Figur 1 ersichtlich ist, münden die gerundeten Seitenflankenflächen kontinuierlich absatzfrei in das gerundete, freie Längsende 13 bis in dessen Rundspitze 19, wobei die Krümmung der Seitenflanken 9, 11 bis zur Rundspitze 19 stetig zunimmt.

Blattkörperseitig nimmt die Krümmung der Seitenflankenflächen ab, bis die Seitenflanken 9, 11 im Wesentlichen tangential in die parallelen ebenen Seitenbegrenzungsseitenflächen 21, 23 des Sägeblattkörpers münden. Insofern ist eine Stärke des Nachlauflängsrands 1 gemäß Querschnitt nach Figur 1 in Breitenrichtung B genauso groß wie die Stärke des Sägeblattkörpers 3 in Breitenrichtung B. Es sei angemerkt, dass die Stärke des Sägeblattkörpers 3 in Breitenrichtung B längs dessen gesamten Ausdehnung in Höhenrichtung H konstant ist. Auf diese Weise wird ein Sägeblattkörper mit einem Sägezahnrand (nicht dargestellt) und einem Nachlauflängsrand 1 geschaffen, wobei die gesamte Körperstruktur keine Außenprofilunterbrechungen, wie Vertiefungen oder Absätze, bis auf den Sägezahnrand, aufweist. Auf diese Weise ist es möglich, die Schnittnutwand 51, 53 bei Zurückziehen und Herausziehen des Sägeblatts durch den Nachlauflängsrand oder den übrigen Sägeblattkörper unverletzt zu lassen.

Der Nachlauflängsrand 1 hat zusammen mit dem unmittelbar benachbarten Abschnitt des Sägeblattkörpers 3 im Wesentlichen eine Torpedoform, wobei der Nachlauflängsrand den Kopf der Torpedoform bildet. Dieser Kopf kann als halb-elliptisch bezeichnet werden.

In Figur 2 ist eine zweite Ausführung des erfindungsgemäßen Nachlauflängsrands dargestellt. Zur besseren Lesbarkeit der Figurenbeschreibung werden dieselben Bezugsziffern wie bei der Ausführung nach Figur 1 verwendet.

Der Nachlauflängsrand 1 gemäß Figur 2 unterscheidet sich von dem nach Figur 1 dadurch, dass nunmehr der Nachlauflängsrand 1 an dessen Montagelängsende 5 eine negative Profilierung hat, die formkomplementär zur positiven Profilierung an dem Montagelängsrand 15 des Sägeblattkörpers 3 ausgeführt ist. Die Profilierungen sind durch einen langen Halsabschnitt 25 und ein demgegenüber dickeren und kurzen Kopfabschnitt 27 gebildet, wodurch eine Einknüpfung des Nachlauflängsrands 1 in den Sägeblattkörper 3 beziehungsweise des Sägeblattkörpers 3 in den Nachlauflängsrand realisierbar ist.

Auch der in Figur 2 gezeigte Nachlauflängsrand 1 hat eine Torpedoform mit einer kontinuierlichen absatzfreien Außenprofilform.

Der besondere vorteilhafte Funktionseffekt des erfindungsgemäßen Nachlauflängsrands 1 ist in Figur 3 dargestellt, wobei für ähnliche oder gleiche Bestandteile dieselben Bezugziffern wie oben verwendet werden.

Es wird darum gebeten, die Figur 4 im Vergleich mit Figur A zu betrachten, welche prinzipiell ein bekanntes Sägeblatt in einer Schnittkurvensituation darstellt.

In Figur 3 ist die Schnittkurve 31 durch die beiden Nutwände 51, 53 begrenzt, wobei der Radius der Innennutwand 51 kleiner ist als der Radius der Außennutwand 53.

Das erfindungsgemäße Sägeblatt 33 hat den Sägeblattkörper 3 und einen Sägezahnrand 35, der aus geschränkten Zähnen realisiert ist.

Dem Sägezahnrand 35 diametral gegenüberliegend ist der erfindungsgemäße Nachlauflängsrand 1 angeordnet, der entsprechend gerundet ist, wie bei den Ausführungen gemäß den Figuren 1 und 2.

Wie in Figur 3 ersichtlich ist, schmiegt sich der Nachlauflängsrand 1 in dem Kurvenschnitt 31 an die äußere Nutwand 53 an, so dass ein Schnittradius realisiert werden kann, der deutlich kleiner ist als der minimale Schnittkurvenradius für die Nutwand h (siehe Figur 4), gemäß dem bekannten Sägeblatt a. Wie in Figur 4 ersichtlich ist, kann aufgrund des rechteckigen Nachlauflängsrands d der Eckbereich nicht der Außennutwand 53 folgen, sondern tatsächlichen nur der Außennutwand h.

Es ist also mit dem erfindungsgemäßen Sägeblatt 33 möglich, trotz im Wesentlichen identischer Höhe H kleinere Schnittradien zu erzielen, weil aufgrund der Rundung am Nachlauflängsrand der Sägezahnrand 35 stärker in das Werkstück eingeneigt werden kann.

Es zeigte sich auch, dass beim Zurücksetzen des Sägeblatts 33 entgegen der Sägerichtung S sowie beim Herausziehen des Sägeblatts 33 aus der Schnittnut 31 eine Verletzung der Nutwand 53 aufgrund der Abrundung ausgeschlossen ist.

### Bezugszeichenliste

- a: Sägeblatt
- b: Sägeblattkörper
- c: Reihe
- d: Längsrandabschnitt
- e: Werkstück
- f: Schnittnut
- g, h: Nutwand
- A: Höhe von a
- B: Breitenrichtung
- H: Höhenrichtung
- S: Sägerichtung

- 1: Nachlauflängsrand
- 3: Sägeblattkörper
- 5: Montagelängsende
- 7: Randhauptkörper
- 9, 11: Längsflankenflächen
- 13: Längsende
- 15: Montagelängsrand
- 19: Rundspitze
- 21, 23: Seitenbegrenzungsseitenflächen
- 25: Halsabschnitt
- 27: Kopfabschnitt
- 31: Schnittkurve
- 33: Sägeblatt
- 35: Sägezahnrand
- 51: Innennutwand
- 53: Außennutwand
- 55: Werkstück

## Patentansprüche

1. Nachlauflängsrand (1) eines Sägeblatts (33), der einem Sägezahnrand (35) des Sägeblatts (33) bezüglich einer Längssägerichtung diametral gegenüberliegt und ein freies Längsende (13) und zwei sich gegenüberliegende Seitenflanken (9, 11) umfasst, die in das Längsende (13) münden, wobei das Längsende (13) gerundet ist, **dadurch gekennzeichnet, dass** er ein Montagelängsende (5,25) zum separaten Montieren an einem dem Sägezahnrand (35) diametral gegenüberliegenden Montagelängsrand (15) des Sägeblatts (33) aufweist.

2. Nachlauflängsrand (1) nach Anspruch 1, **dadurch gekennzeichnet, dass** beide Seitenflanken (9, 11) derart gerundet sind, dass sie außenformkontinuierlich frei eines Profilsprungs, wie eines Absatzes oder einer Vertiefung, in das gerundete Längsende (13) übergehen und/oder dass sich die Seitenflanken (9, 11) parallel zueinander in Längsrichtung und parallel zum Längsrand erstrecken.

3. Nachlauflängsrand (1) nach einem der vorstehenden Ansprüche, **dadurch gekennzeichnet, dass** er einen zu dessen Längsrichtung orthogonalen Querschnitt aufweist, dessen durch die gerundeten Seitenflanken (9, 11) und/oder das runde Längsende (13) gebildeter Begrenzungsrand ein in Längsrichtung des Sägeblattes unveränderliches Außenprofil definiert, wobei insbesondere das Außenprofil einen kleinsten Radius an dem runden Längsende (13) aufweist.

4. Nachlauflängsrand (1) nach einem der vorstehenden Ansprüche, **dadurch gekennzeichnet, dass** er einen zu dessen Längsrichtung orthogonalen Querschnitt aufweist, der im Wesentlichen teil-elliptisch oder teil-kreisförmig, vorzugsweise im Wesentlichen halb-elliptisch oder halb-kreisförmig, ist, und/oder dass er einen zu dessen Längsrichtung orthogonalen Querschnitt in einer Torpedoform aufweist.

5. Nachlauflängsrand (1) nach einem der vorstehenden Ansprüche, **dadurch gekennzeichnet, dass** er einen dem Sägezahnrand (35) zugewandten Übergangslängsabschnitt, insbesondere ein Montagelängsende (5,25) zum Befestigen des Nachlauflängsrands (1) an einen dem Sägezahnrand (35) diametral gegenüberliegenden Montagelängsrand (15) des Sägeblatts (33), aufweist, wobei die Seitenflanken (9, 11) derart gerundet oder gekrümmt sind, dass die Seitenflanken (9, 11) am Übergangslängsabschnitt tangential in die jeweilige der Seitenflanke (9, 11) benachbarte Seitenfläche eines Sägeblattkörpers (3) münden, wobei insbesondere der Übergangslängsabschnitt derart dimensioniert ist, dass er im Wesentlichen formkontinuierlich, frei eines Absatzes und/oder einer Vertiefung in das Sägeblatt (33) übergeht, und/oder der Übergangslängsabschnitt eine insbesondere maximale Querschnittsbreite aufweist, die gleich einer insbesondere konstanten Stärke des Sägeblatts (33) ist.

6. Nachlauflängsrand (1) nach Anspruch 5, **dadurch gekennzeichnet, dass** die maximale Querschnittsbreite an dem Übergangslängsabschnitt kontinuierlich, vorzugsweise stetig zunehmend, bis zum runden Längsende (13) abnimmt.

7. Nachlauflängsrand (1) nach einem der vorstehenden Ansprüche, **dadurch gekennzeichnet, dass** eine maximale Querschnittshöhe des Nachlauflängsrands (1) insbesondere zwischen einem Übergangslängsabschnitt und dem runden Längsende (13) größer, insbesondere deutlich größer als, vorzugsweise doppelt so groß wie, eine maximale Querschnittsbreite des Nachlauflängsrands (1) insbesondere auf Höhe des Übergangslängsabschnitts ist, und/oder dass er achsensymmetrisch ist, insbesondere zu einer Querschnittshöhenachse, die insbesondere mit einer Höhenrichtung (H) des Sägeblatts (33) fluchtet.

8. Nachlauflängsrand (1) nach einem der vorstehenden Ansprüche, **dadurch gekennzeichnet, dass** das Montagelängsende (5) sich parallel zum runden Längsende (13) erstreckt, wobei insbesondere das Montagelängsende (5) mit einer positiven Profilierung versehen ist, die an eine der positiven Profilierung formkomplementären negativen Profilierung des Montagelängsrands (15) des Sägeblatts (33) angepasst ist, um den Nachlauflängsrand (1) an das Sägeblatt (33) zu befestigen, wobei insbesondere die positive Profilierung in Längsrichtung des Nachlauflängsrands (1) formkonstant ist.

9. Nachlauflängsrand (1) nach Anspruch 8, **dadurch gekennzeichnet, dass** die positive Profilierung durch wenigstens einen Hinterschnitt, vorzugsweise einen, zwei oder drei Hinterschnitte, gebildet ist.

10. Nachlauflängsrand (1) nach Anspruch 8 oder 9, **dadurch gekennzeichnet, dass** die positive Profilierung eine Keilform, eine Pfeilform, einen Baumform, eine Tannenbaumform oder dergleichen aufweist.

11. Nachlauflängsrand (1) nach einem der vorstehenden Ansprüche, **dadurch gekennzeichnet, dass** er aus einem Werkstoff reduzierter Kontaktreibung gefertigt ist und/oder dass er aus keramischem Material, Nylon, Teflon, ultrahochmolekulargewichtigem Polyethylen (UHMWPE), Verbundwerkstoff oder Schnellarbeitsstahl (HSS oder HCS) gefertigt ist.

12. Nachlauflängsrand (1) nach einem der vorstehenden Ansprüche, **dadurch gekennzeichnet, dass** er an dem Montagelängsrand (15) des Sägeblatts (33) eingeknüpft oder verschweißt ist und/oder dass er mit einer Beschichtung reduzierter Kontaktreibung versehen ist, die insbesondere durch physikalische Gasphasenabscheidung (PVD) oder chemische Gasphasenabscheidung (CVD) gebildet ist.

13. Nachlauflängsrand (1) nach einem der vorstehenden Ansprüche, **dadurch gekennzeichnet, dass** dessen Profil-Oberfläche poliert ist.

14. Sägeblatt (33) für eine Säge, insbesondere Bandsäge, eine Stichsäge, wie eine Handstichsäge, oder Bogensäge, umfassend einen beim Sägen vorlaufenden Sägezahnrand (35) und einen nach einem der vorstehenden Ansprüche gebildeten Nachlauflängsrand (1).

15. Sägeblatt (33) nach Anspruch 14, bei dem der Nachlauflängsrand (1), ein Sägeblattkörper (3) und gegebenenfalls den Sägezahnrand (35) aus einem Stück gefertigt sind.

## Claims

1. A trailing longitudinal edge (1) of a saw blade (33), which lies diametrically opposite a saw tooth edge (35) of the saw blade (33) relative to a longitudinal sawing direction and comprises a free longitudinal end (13) and two mutually opposite side flanks (9, 11) which lead into the longitudinal end (13), wherein the longitudinal end (13) is rounded, **characterised in that** it comprises a longitudinal assembly end (5, 25) for separate assembly on a longitudinal assembly edge (15) of the saw blade (33), said longitudinal assembly edge lying diametrically opposite the saw tooth edge (35).

2. The trailing longitudinal edge (1) according to claim 1, **characterised in that** both sides flanks (9, 11) are rounded in such a way that they transform with a continuous outer shape, free from a profile discontinuity, such as a shoulder or a recess, into the rounded longitudinal end (13) and/or that the side flanks (9, 11) extend parallel to one another in the longitudinal direction and parallel to the longitudinal edge.

3. The trailing longitudinal edge (1) according to any one of the preceding claims, **characterised in that** it has a cross-section orthogonal to its longitudinal direction whose boundary edge formed by the rounded side flanks (9, 11) and/or the rounded longitudinal end (13) defines an external profile unchanging in the longitudinal direction of the saw blade, wherein in particular the external profile has an extremely small radius at the rounded longitudinal end (13).

4. The trailing longitudinal edge (1) according to any one of the preceding claims, **characterised in that** it has a cross-section orthogonal to its longitudinal direction, which is essentially part-elliptical or part-circular, preferably essentially semi-elliptical or semicircular, and/or that it has a cross-section in a torpedo shape orthogonal to its longitudinal direction.

5. The trailing longitudinal edge (1) according to any one of the preceding claims, **characterised in that** it comprises a transitional longitudinal portion facing towards the saw tooth edge (35), in particular a longitudinal assembly end (5, 25) for attaching the trailing longitudinal edge (1) to a longitudinal assembly edge (15) of the saw blade (33) lying diametrically opposite the saw tooth edge (35), wherein the side flanks (9, 11) are rounded or curved in such a way that the side flanks (9, 11) at the transitional longitudinal portion lead tangentially into the respective lateral surface of a saw blade body (3) adjacent to the side flank (9, 11), wherein in particular the transitional longitudinal portion is dimensioned in such a way that it transforms with an essentially continuous shape, free from a shoulder and/or a recess, into the saw blade (33), and/or the transitional longitudinal portion has an, in particular, maximum cross-sectional width which is equal to an, in particular, constant thickness of the saw blade (33).

6. The trailing longitudinal edge (1) according to claim 5, **characterised in that** the maximum cross-sectional width at the transitional longitudinal portion diminishes continuously, preferably constantly increasingly, up to the round longitudinal end (13).

7. The trailing longitudinal edge (1) according to any one of the preceding claims, **characterised in that** the maximum cross-sectional height of the trailing longitudinal edge (1), in particular between a transitional longitudinal portion and the round longitudinal end (13), is greater, in particular a much greater than, preferably twice as large as, a maximum cross-sectional width of the trailing longitudinal edge (1), in particular at the height of the transitional longitudinal portion, and/or that it is axis-symmetrical, in particular to a cross-sectional height axis, which is aligned in particular with a height direction (H) of the saw blade (33).

8. The trailing longitudinal edge (1) according to any one of the preceding claims, **characterised in that** the longitudinal assembly end (5) extends parallel to the round longitudinal end (13), wherein in particular the longitudinal assembly end (5) is provided with a positive profiling, which is matched to a negative profiling of the longitudinal assembly edge (15) of the saw blade (33) that is complementary in shape to the positive profiling, in order to fasten the trailing longitudinal edge (1) to the saw blade (33), wherein in particular the positive profiling is constant in shape in the longitudinal direction of the trailing longitudinal edge (1).

9. The trailing longitudinal edge (1) according to claim 8, **characterised in that** the positive profiling is formed by at least one undercut, preferably one, two or three undercuts.

10. The trailing longitudinal edge (1) according to claim 8 or 9, **characterised in that** the positive profiling has a wedge shape, an arrow shape, a tree shape, a pine-tree shape or suchlike.

11. The trailing longitudinal edge (1) according to any one of the preceding claims, **characterised in that** it is produced from a material having reduced contact friction and/or that it is produced from ceramic material, nylon, Teflon, ultra-high molecular weight polyethylene (UHMWPE), composite material or high-speed steel (HSS or HCS).

12. The trailing longitudinal edge (1) according to any one of the preceding claims, **characterised in that** it is tied in or welded to the longitudinal assembly edge (15) of the saw blade (33) and/or that it is provided with a coating having reduced contact friction, which is formed in particular by physical vapour deposition (PVD) or chemical vapour deposition (CVD).

13. The trailing longitudinal edge (1) according to any one of the preceding claims, **characterised in that** its profile surface is polished.

14. A saw blade (33) for a saw, in particular a band saw, a jigsaw, such as a manual keyhole saw, or a coping saw, comprising a leading saw tooth edge (35) during sawing and a trailing longitudinal edge (1) formed according to any one of the preceding claims.

15. The saw blade (33) according to claim 14, wherein the trailing longitudinal edge (1), a saw blade body (3) and, where appropriate, the saw tooth edge (35) are produced in one piece.

## Revendications

1. Bord longitudinal de poursuite (1) d'une lame de scie (33), qui est diamétralement opposé à un bord de dent de scie (35) de la lame de scie (33), par rapport à une direction longitudinale de sciage et qui comprend une extrémité longitudinale (13) libre et deux flancs latéraux (9, 11) mutuellement opposés qui débouchent dans l'extrémité longitudinale (13), l'extrémité longitudinale (13) étant arrondie, **caractérisé en ce qu'**il comporte une extrémité longitudinale de montage (5,25) pour un montage séparé sur un bord longitudinal de montage (15) de la lame de scie (33) diamétralement opposé au bord de dent de scie (35).

2. Bord longitudinal de poursuite (1) selon la revendication 1, **caractérisé en ce que** les deux flancs latéraux (9, 11) sont arrondis de sorte qu'en disposant d'une forme extérieure continue exempte d'un saut de profil, tel qu'un déport ou un creux, ils passent dans l'extrémité longitudinale (13) arrondie et/ou que les flancs latéraux (9, 11) s'étendent à la parallèle l'un de l'autre en direction longitudinale et à la parallèle du bord longitudinal.

3. Bord longitudinal de poursuite (1) selon l'une quelconque des revendications précédentes, **caractérisé en ce qu'**il comporte une section transversale orthogonale par rapport à sa direction longitudinale, dont le bord de délimitation formé par les flancs latéraux (9, 11) arrondis et/ou par l'extrémité longitudinale (13) ronde définit un profil extérieur invariable dans la direction longitudinale de la lame de scie, notamment le profil extérieur comportant un rayon plus petit sur l'extrémité longitudinale (13) ronde.

4. Bord longitudinal de poursuite (1) selon l'une quelconque des revendications précédentes, **caractérisé en ce qu'**il comporte une section transversale orthogonale par rapport à sa direction longitudinale qui est sensiblement en partie elliptique ou en partie circulaire, de préférence semi-elliptique ou semi-circulaire et/ou **en ce qu'**il comporte une section transversale orthogonale par rapport à sa direction longitudinale, sous une forme de torpille.

5. Bord longitudinal de poursuite (1) selon l'une quelconque des revendications précédentes, **caractérisé en ce qu'**il comporte une partie longitudinale de transition faisant face au bord de dent de scie (35), notamment une extrémité longitudinale de montage (5, 25) pour la fixation du bord longitudinal de poursuite (1) sur un bord longitudinal de montage (15) de la lame de scie (33) diamétralement opposé au bord de dent de scie (35), les flancs latéraux (9, 11) étant arrondis ou cintrés de sorte que, sur la partie longitudinale de transition, les flancs latéraux (9, 11) débouchent de manière tangentielle dans la surface latérale respective voisine du flanc latéral (9, 11) d'un corps de lame de scie (3), notamment la partie longitudinale de transition étant dimensionnée de telle sorte qu'elle passe sensiblement avec une forme continue, exempte d'un déport et/ou d'un creux dans la lame de scie (33) et/ou **en ce que** la partie longitudinale de transition comporte une largeur de section transversale notamment maximale qui est égale à une épaisseur notamment constante de la lame de scie (33).

6. Bord longitudinal de poursuite (1) selon la revendication 5, **caractérisé en ce que** la largeur maximale de section transversale sur la partie longitudinale de transition décroît en continu, de préférence en augmentation régulière jusqu'à l'extrémité longitudinale (13) ronde.

7. Bord longitudinal de poursuite (1) selon l'une quelconque des revendications précédentes, **caractérisé en ce qu'**une hauteur maximale de section transversale du bord longitudinal de poursuite (1), notamment entre une partie longitudinale de transition et l'extrémité longitudinale (13) ronde est supérieure, notamment nettement supérieure, de préférence du double d'une largeur maximale de section transversale du bord longitudinal de poursuite (1) notamment à hauteur de la partie longitudinale de transition, et/ou **en ce qu'**il est symétrique par rapport à l'axe, notamment à un axe d'azimut de section transversale qui est notamment aligné sur une direction d'azimut (H) de la lame de scie (33).

8. Bord longitudinal de poursuite (1) selon l'une quelconque des revendications précédentes, **caractérisé en ce que** l'extrémité longitudinale de montage (5) s'étend à la parallèle de l'extrémité longitudinale (13) ronde, notamment l'extrémité longitudinale de montage (5) étant munie d'un profilage positif qui est adapté à un profilage négatif du bord longitudinal de montage (15) de la lame de scie (33), à forme complémentaire avec celle du profilage positif, pour fixer le bord longitudinal de poursuite (1) sur la lame de scie (33), notamment le profilage positif étant de forme constante en direction longitudinale du bord longitudinal de poursuite (1).

9. Bord longitudinal de poursuite (1) selon la revendication 8, **caractérisé en ce que** le profilage positif est formé par au moins une contre-dépouille, de préférence par une, deux ou trois contre-dépouilles.

10. Bord longitudinal de poursuite (1) selon la revendication 8 ou la revendication 9, **caractérisé en ce que** le profilage positif est cunéiforme, en forme de flèche, d'arbre, de sapin ou similaires.

11. Bord longitudinal de poursuite (1) selon l'une quelconque des revendications précédentes, **caractérisé en ce qu'**il est fabriqué dans une matière à friction de contact réduite et ou **en ce qu'**il est fabriqué en matière céramique, en nylon, en téflon, en polyéthylène à poids moléculaire ultra-haut (UHMWPE), en matière composite ou en acier à coupe rapide (HSS ou HCS).

12. Bord longitudinal de poursuite (1) selon l'une quelconque des revendications précédentes, **caractérisé en ce qu'**il est enlié ou soudé sur le bord longitudinal de montage (15) de la lame de scie (33) et/ou **en ce qu'**il est muni d'un revêtement à friction de contact réduite qui est formé notamment par dépôt en phase vapeur (PVD) ou par dépôt chimique en phase vapeur (CVD).

13. Bord longitudinal de poursuite (1) selon l'une quelconque des revendications précédentes, **caractérisé en ce que** sa surface de profil est polie.

14. Lame de scie (33) pour une scie, notamment une scie à ruban, une scie à guichet, comme une scie à guichet manuelle ou une scie à chantourner, comportant un bord de dent de scie (35) d'amorce et un bord longitudinal de poursuite (1) formé selon l'une quelconque des revendications précédentes.

15. Lame de scie (33) selon la revendication 14, sur laquelle le bord longitudinal de poursuite (1), un corps de la lame de scie (3) et le cas échéant le bord de dent de scie (35) sont fabriqués en monobloc.
